# EUROPÄISCHE PATENTSCHRIFT

(11) **EP 1 184 217 B1**
(45) Veröffentlichungstag und Bekanntmachung des Hinweises auf die Patenterteilung: **05.07.2006**
(21) Anmeldenummer: 01115338.4
(22) Anmeldetag: 26.06.2001
(51) Int. Cl.: B60J 3/02

(54) **Sonnenblende für Fahrzeuge**
Sun visor for vehicles
Pare-soleil pour véhicules

(30) Priorität: 31.08.2000 DE 10042657
(43) Veröffentlichungstag der Anmeldung: 06.03.2002
(73) Patentinhaber: Johnson Controls Interiors GmbH & Co. KG, 42285 Wuppertal (DE); Dr.Ing. h.c. F. Porsche Aktiengesellschaft, 71287 Weissach (DE)
(72) Erfinder: Viertel, Lothar, 66802 Überherrn (DE); Wack, Gilles, 57720 Erching (FR); Welter, Patrick, 57730 La Chambre (FR)
(74) Vertreter: Hemmelmann, Klaus

(56) Entgegenhaltungen:
- EP-A- 0 330 484
- EP-A- 0 421 201
- WO-A-98/54020
- US-A- 5 331 525
- US-A- 5 417 466
- US-A- 5 902 002

## Beschreibung

Die Erfindung bezieht sich auf eine Sonnenblende für Fahrzeuge mit einem ersten und einem zweiten Sonnenblendenkörper.

In der deutschen Patentanmeldung mit dem Aktenzeichen 100 30 689.3 ist eine Sonnenblende für Fahrzeuge gezeigt mit einem ersten, eine flache etwa rechteckige Form aufweisenden Sonnenblendenkörper, der im Bereich eines Stirnendes einen ersten Schenkel einer verkröpften Sonnenblendenachse lagert und im Bereich eines anderen Endes einen Gegenlagerstift trägt. Dabei ist die Sonnenblendenachse mit ihrem zweiten Schenkel in einem Hauptlagerböckchen gelagert und der Gegenlagerstift ist lösbar in einem in einem Gegenlagerböckchen ausgebildeten Klipsmaul aufgenommen. Der erste Sonnenblendenkörper ist aus einer am Dachhimmel eines Fahrzeugs anliegenden Nichtgebrauchslage nach unten klappbar und zu einer Gebrauchslage vor einer Fahrzeugseitenscheibe schwenkbar. Die ältere Patentanmeldung zeigt weiterhin einen zweiten, eine flache etwa rechteckige Form aufweisenden Sonnenblendenkörper, der im Bereich seiner Längsenden Achszapfen aufweist, die in Lageröffnungen des Hauptlager- und Gegenlagerböckchens eingreifen, um den zweiten Sonnenblendenkörper aus einer etwa waagerecht ausgerichteten Nichtgebrauchslage in eine etwa vertikal ausgerichtete Gebrauchslage klappen zu können. Der erste Sonnenblendenkörper ist um eine mit den Achszapfen fluchtende Achslinie klappbar, während der zweite Sonnenblendenkörper um eine mit dem ersten Schenkel der Sonnenblendenachse und dem Gegenlagerstift fluchtende Achslinie klappbar ist, die zur ersten Achslinie beabstandet, jedoch parallel zu dieser verläuft.

Der vorliegenden Erfindung liegt die Aufgabe zugrunde durch Inovation in bezug der Konzeptierung, Design sowie der Parameter Sicherheit und Komfort eine von der Automobilindustrie akzeptierbare Sonnenblende anbieten zu können, die dem heutigen Anforderungskatalog entspricht.

Zur Lösung dieser Aufgabe sind erfindungsgemäß die im Anspruch 1 angegebenen Maßnahmen vorgesehen. Vorteilhafte Ausgestaltungen und zweckmäßige Weiterbildungen der Erfindung sind in den Unteransprüchen gekennzeichnet.

Die Erfindung bietet besondere Vorteile. Insoweit ist hervorzuheben, daß beide in der Nichtgebrauchslage übereinanderliegende Sonnenblendenkörper nur eine Achslinie sowohl in horizontaler als auch in vertikaler Ebene haben. Damit wird dem Benutzer die Möglichkeit geboten, einen einzelnen Sonnenblendenkörper oder - als Gesamtpaket - beide Sonnenblendenkörper in Funktionsstellungen zu bewegen, und zwar ohne umständliches Prozedere. Zum anderen ermöglicht die erfindungsgemäße Sonnenblende unterschiedliche Variationen in der Anordnung von z.B. Kosmetikspiegeln mit und ohne Beleuchtung sowie anderer Ausstattungskomponenten. Die Lagerelemente sind stylistisch anmutend gestaltet und lassen sich trotz ihrer Funktionsaufgaben harmonisch im Gesamtbild der Sonnenblende integrieren. Das aus den zwei Sonnenblendenkörpern gebildete Gesamtpaket ist auf ein beschränktes Gesamtdickenmaß realisierbar, weil bei einem der Sonnenblendenkörper die zugehörigen Mittel zur Klapp- bzw. Rastmomentenerzeugung extern in die Lagerböckchen integriert werden konnten.

Ausführungsbeispiele der Erfindung werden im folgenden anhand der Zeichnungen erläutert, und es zeigen:
- Fig. 1: eine Seitenansicht,
- Fig. 2: eine perspektivische Gesamtansicht,
- Fig. 3: eine Seitenansicht in einer Positionsstellung,
- Fig. 4: eine perspektivische Ansicht einer Positionsstellung,
- Fig. 5: eine weitere Seitenansicht einer Positionsstellung,
- Fig. 6: eine weitere perspektivische Ansicht einer Positionsstellung,
- Fig. 7: eine weitere Positionsstellung in perspektivischer Ansicht.
- Fig. 8: eine Einzelheit,

- Fig. 9: einen Schnitt folgend der Linie A-A in Fig. 2 der neuen Sonnenblende und
- Fig. 10 bis 15: die neue Sonnenblende in unterschiedlichen Ausgestaltungen hinsichtlich einer Spiegel- und Beleuchtungseinrichtungs-Anordnung.

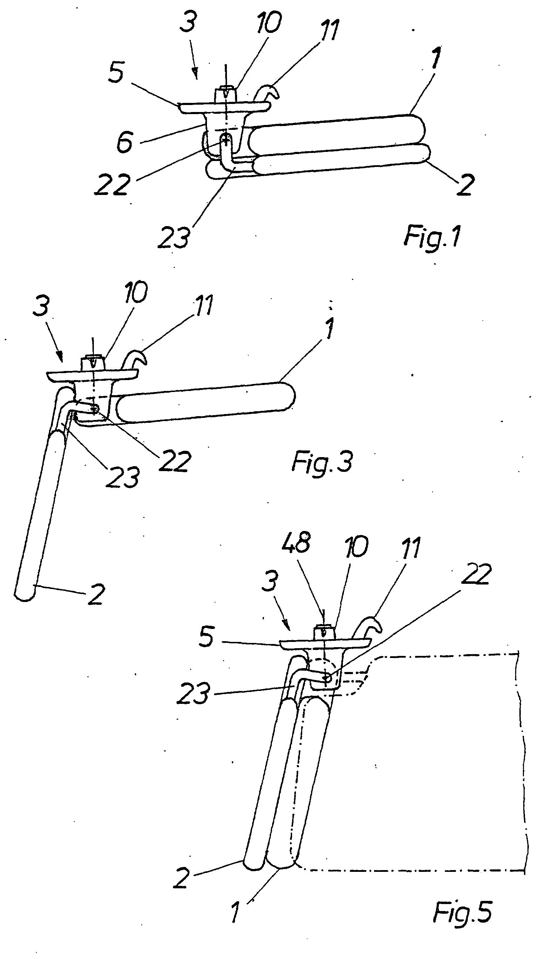

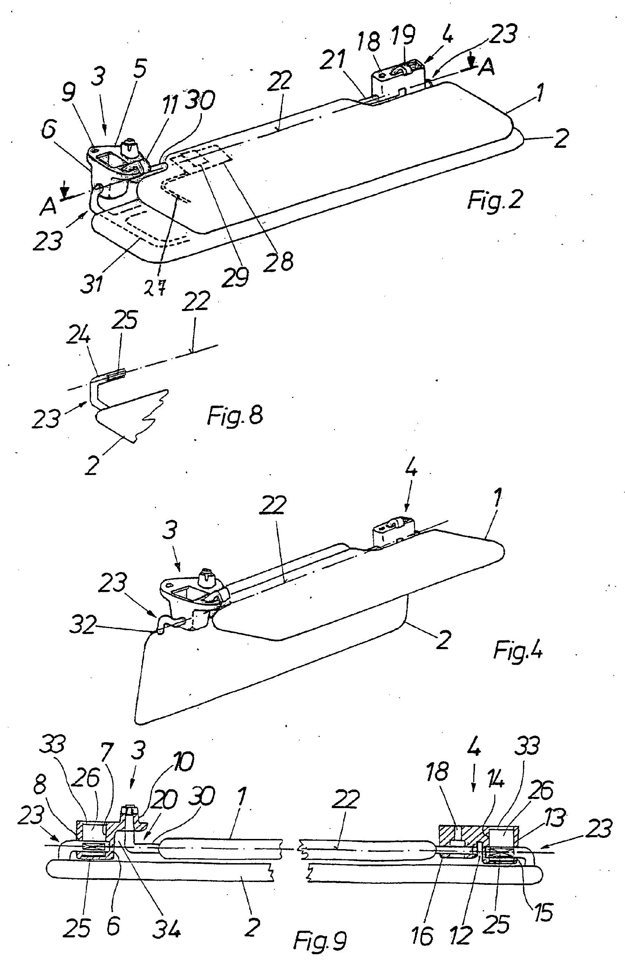

Fig. 1 und 2 zeigen die neue Sonnenblende in der Nichtgebrauchslage, in der sich ein erster Sonnenblendenkörper 1 in der Himmelanlage und ein zweiter Sonnenblendenkörper 2 sich in flächiger Anlage am ersten Sonnenblendenkörper 1 befindet. Die Sonnenblendenkörper 1 und 2 bilden damit ein Sonnenblendenkörperpaket.

Im Sonnenblendenkörper 1 ist eine Stabilisierungseinlage 27 eingelagert, die mit einem Lagerkörper 28 verbunden ist. Der Lagerkörper 28, der mit einer Momentenfeder 29 bestückt ist, dient zur Lagerung eines ersten Schenkels 30 einer abgewinkelten Sonnenblendenachse 20. Der zweite Schenkel der Sonnenblendenachse 20 ist in einem Hauptlagerböckchen 3 drehbeweglich gelagert. An dem der Sonnenblendenachse 20 abgewandten Endbereich befindet sich ein mit dem ersten Schenkel der Sonnenblendenachse 20 fluchtender Gegenlagerstift 21, der lösbar in einem Gegenlagerböckchen 4 gelagert ist. Der Sonnenblendenkörper 1 ist sowohl klappbar als auch schwenkbeweglich gelagert.

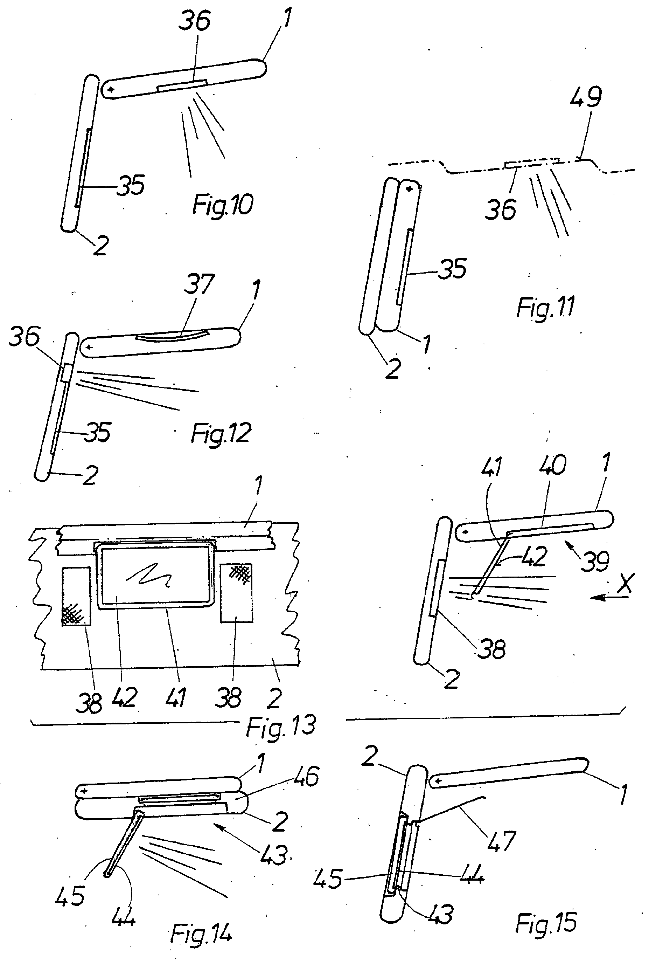

Der zweite Sonnenblendenkörper 2 weist ebenfalls eine Stabilisierungseinlage 31 auf, die zumindest teilweise aus Rundstahl gebildet ist. Die Stabilisierungseinlage 31 dient gleichzeitig zur Bildung von Lagerachsen 23, die an den Endbereichen des zweiten Sonnenblendenkörpers 2 angeordnet sind, einen Längsrand des zweiten Sonnenblendenkörpers 2 überragen und die mit gegeneinandergerichteten und parallel zum genannten Längsrand ausgerichteten Endabschnitten 24 zum einen im Hauptlagerböckchen 3 und zum anderen im Gegenlagerböckchen 4 gelagert sind. Die Lagerachsen 23, die verkröpft bzw. zweifach abgewinkelt sind (vgl. auch Detail nach Fig. 8) sind, wie erwähnt, Bestandteil der Stabilisierungseinlage 31, so daß eine separate Achsenherstellung und Achsenmontage entfällt. Ein sauberer Achsenaustritt 32 ist erfahrungsgemäß ohne besonderen Aufwand realisierbar.

Die Endabschnitte 24 der Lagerachsen 23 weisen (vgl. Fig. 8) Abflachungen 25 auf, die im Zusammenwirken mit in dem Hauptlagerböckchen 3 und Gegenlagerböckchen 4 montierten Momentenfedern 26 (Fig. 9) ein Klapp- und Rastelement erzeugen, welches ausreicht um den Sonnenblendenkörper 2 in der Nichtgebrauchslage und in beliebigen Gebrauchslagen zu halten. Die Endabschnitte 24 der Lagerachsen 23 fluchten miteinander und in der montierten Lage auch mit dem ersten Schenkel 30 der Sonnenblendenachse 20 und mit dem Gegenlagerstift 21, so daß diese miteinander gemeinsam eine Achsenmittellinie haben, was besonders deutlich in Fig. 9 gezeigt ist. Während der Sonnenblendenkörper 1 klapp- und schwenkbar gelagert ist, ist für den Sonnenblendenkörper 2 eine nur klappbare Anordnung vorgesehen.

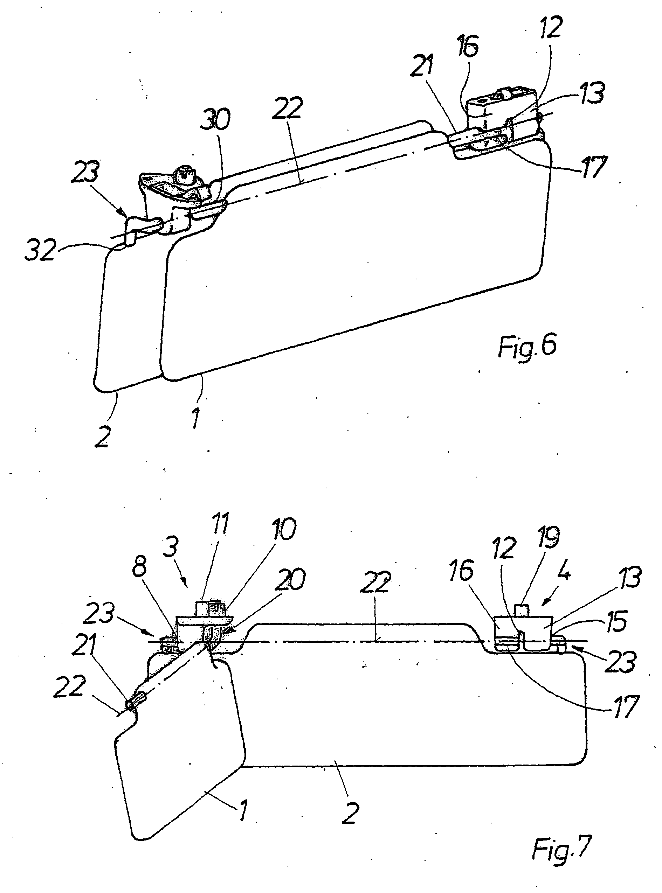

Fig. 3 stellt eine Seitenansicht und Fig. 4 eine perspektivische Ansicht dar, in der sich der erste Sonnenblendenkörper 1 in der Himmelanlage bzw. Nichtgebrauchslage befindet, während der zweite Sonnenblendenkörper eine heruntergeklappte Blendschutzstellung einnimmt. Wie in den Zeichnungen dargestellt, ist die Achsenmittellinie 22 sowohl in waagerechter Ebene (Fig. 9) als auch in senkrechter Ebene (Fig. 1, 3 und 5) gegeben.

Fig. 5 stellt eine Seitenansicht und Fig. 6 eine perspektivische Ansicht der neuen Sonnenblende dar, wobei sich der Sonnenblendenkörper 1 und der Sonnenblendenkörper 2 in der heruntergeklappten Stellung vor einer nicht gezeigten Fahrzeugwindschutzscheibe befinden. Durch die gemeinsame Achsenmittellinie 2 können die Sonnenblendenkörper 1 und 2 einzeln oder auch gemeinsam hoch- oder heruntergeklappt werden, ohne sich dabei im Bewegungsablauf zu behindern.

Fig. 7 zeigt eine Lichtschutzposition der neuen Sonnenblende, bei der sich der erste Sonnenblendenkörper 1 vor einer nichtgezeigten Fahrzeugseitenscheibe und der zweite Sonnenblendenkörper 2 vor einer nichtgezeigten Fahrzeugwindschutzscheibe befindet. Der erste Sonnenblendenkörper 1 wurde hierzu aus einer Position nach Fig. 5 und 6 um die vertikale Drehachse 48 geschwenkt.

Der Schnitt nach Fig. 9 veranschaulicht, wie die beiden übereinanderliegenden Sonnenblendenkörper 1 und 2 zum einen im Hauptlagerböckchen 3 und zum anderen im Gegenlagerböckchen 4 gelagert sind mit einer gemeinsamen durch die Achsenmittellinie 22 definierten Klappachse.

Das Hauptlagerböckchen 3 ist ein Kunststoff-Spritzgußteil mit einer etwa dreieckig ausgebildeten Grundplatte 5, einem daran angebundenen Korpus 6 und einem Achsdom 10. Die Grundplatte 5 weist ein Befestigungsloch 9 und einen Montagehaken 11 zum Festlegen des Hauptlagerböckchens 3 an einem Dachhimmel bzw. einer nicht gezeigten Fahrzeugkarosserie auf. Im Korpus 6 ist ein etwa rechteckiger Hohlraum 7 für die Aufnahme der schon erwähnten Momentenfeder 26 ausgebildet, wie auch ein Achsenaufnahmeloch 8 für den Endabschnitt 24 der (auf der Zeichnung) linksseitigen Lagerachse 23. Der Korpus 6 ist asymetrisch an der Grundplatte 5 ausgebildet, wodurch ein Freibereich 34 geschaffen ist. Der Achsdom 10 besitzt eine bevorzugt konisch ausgebildete Aufnahmebohrung für den zweiten Schenkel der Sonnenblendenachse 20, welcher mit einem entsprechenden Gegenkonus versehen, in die Aufnahmebohrung eingepreßt und mit einem angeformten Pilzkopf das freie Ende des Achsdoms 10 hintergreift.

Das Gegenlagerböckchen 4 ist ebenfalls ein Kunststoffspritzgußteil und weist einen durch einen Freibereich 12 vom übrigen Böckchenteil abgesetzten Korpus 13 und einen sich an der anderen Seite des Freibereichs anschließenden Korpus 16 auf. Im Korpus 13 befindet sich ein etwa rechteckiger Hohlraum 14 für eine darin eingesetzte Momentenfeder 26 und ein Achsenaufnahmeloch 15 für den Endabschnitt 24 der (auf der Zeichnung) rechtsseitigen Lagerachse 23. Im Korpus 16 befindet sich eine durch ein Klipsmaul 17 zugängliche Lageraufnahme für den Gegenlagerstift 21 wie auch ein Durchgangsloch 18 für eine Befestigungsschraube. Ferner ist auch beim Gegenlagerböckchen 4 ein der Montageerleichterung dienender Montagehaken 19 vorgesehen. Die Momentenfedern 26 sind jeweils durch in den Lagerböckchen 3 und 4 ausgebildete Hinterschneidungen 33 gehalten.

Bei der Montage werden das Hauptlagerböckchen 3 nebst Momentenfeder 26 wie auch das Gegenlagerböckchen 4 nebst Momentenfeder 26 auf den jeweils zugehörigen Endabschnitt 24 der Lagerachsen 23 aufgeschoben. Danach wird der zweite Schenkel der Sonnenblendenachse 20, die bereits am Sonnenblendenkörper 1 festgelegt ist, in den Achsdom 10 eingedrückt und verklipst, wozu der Pilzkopf vorgesehen ist. Der Gegenlagerstift 21 wird in das Klipsmaul 17 eingedrückt und die neue Sonnenblende liegt einbaufertig vor. Im Automobilwerk erfolgt die Montage der Sonnenblende durch Festlegung der Lagerböckchen 3 und 4 am Dachhimmel bzw. an der Fahrzeugkarosserie.

In den Fig. 10 bis 15 sind verschiedene Ausgestaltungsmöglichkeiten der neuen Sonnenblende gezeigt, die sich auf Beleuchtungseinrichtungen und/oder Spiegel für Make-up-Zwecke beziehen.

Gemäß Fig. 10 ist vorgesehen, den Sonnenblendenkörper 1 mit einer Beleuchtungseinrichtung 36 und den Sonnenblendenkörper 2 mit einem Spiegel 35 auszurüsten. Durch eine entsprechende elektrische Verdrahtung und Schaltung ist Vorsorge dafür zu treffen, daß die Beleuchtungseinrichtung 36 eingeschaltet wird, wenn der Sonnenblendenkörper 2 in die dargestellte Position geklappt und bei einem Zurückklappen auch wieder ausgeschaltet wird.

Gemäß Fig. 11 befindet sich eine Beleuchtungseinrichtung 36 im Fahrzeughimmel 49 und ein Spiegel 35 am Sonnenblendenkörper 1 oder - wie nicht gezeigt - am Sonnenblendenkörper 2. Das Ein- und Ausschalten der Beleuchtungseinrichtung sollte wie zu Fig. 10 gesagt erfolgen.

Bei der Ausführungsform nach Fig. 12 befindet sich am Sonnenblendenkörper 2 sowohl ein Spiegel 35 als auch eine Beleuchtungseinrichtung 36. Dies kann alternativ auch am Sonnenblendenkörper 1, der hier mit einem Vergrößerungsspiegel 37 bestückt ist, vorgesehen sein. Das Ein- und Ausschalten der Beleuchtungseinrichtung 36 sollte auch hier zweckmäßigerweise durch die Klappbewegung des zweiten Sonnenblendenkörpers 2 erfolgen.

Bei der Ausführungsform gemäß Fig. 13 werden durch Herunterklappen des Sonnenblendenkörpers 2 die darin eingesetzten Leuchtfenster 38, hinter denen sich jeweils eine Beleuchtungseinrichtung verbirgt, sichtbar. Im Sonnenblendenkörpers 1 ist eine Spiegelbaueinheit 39 integriert, die aus einer Kassette 40, einem Deckel 41 und einem damit verbundenen Spiegel 42 besteht. Der Deckel 41 mit daran angeordnetem Spiegel 42 ist abklappbar ohne den Sonnenblendenkörper 1 selbst abklappen zu müssen. Wird der Deckel 41 durch Abklappen geöffnet, so entsteht das Erscheinungsbild gemäß Pfeilrichtung X, wobei sich der Spiegel 42 mit Deckel 41 maßlich vorbestimmt zwischen den Leuchtfenstern 38 befindet. Durch eine entsprechende Verkabelung und Schaltung, werden die Leuchtfenster 38 hinterleuchtet, indem die dahinter befindlichen Beleuchtungseinrichtungen durch Abklappen des Deckels 41 eingeschaltet werden.

Fig. 14 zeigt eine Seitenansicht der beiden übereinanderliegenden und sich in der Himmelanlage befindlichen Sonnenblendenkörper 1 und 2. Eine Spiegelbaueinheit 43 befindet sich im zweiten Sonnenblendenkörper 2, der dazu eine Durchgangsöffnung aufweist. Nach Fig. 14 kann ein Benutzer den Spiegel 44, der in einem Deckelgehäuse 45 aufgenommen ist, herunterklappen und einsehen. Bei der Seitenansicht nach Fig. 15 ist das Deckelgehäuse 45 nebst Spiegel 44 zugeklappt und der zweite Sonnenblendenkörper 2 heruntergeklappt. Der Spiegel 44 ist nun durch Aufklappen der zur Spiegelbaueinheit 43 gehörenden Abdeckklappe 47 einsehbar. Bei dieser Ausführungsform empfiehlt sich eine Beleuchtungseinrichtung der anhand von Fig. 11 beschriebenen Art.

## Patentansprüche

1. Sonnenblende für Fahrzeuge mit einem ersten, eine flache etwa rechteckige Form aufweisenden Sonnenblendenkörper (1), der im Bereich eines Stirnendes einen ersten Schenkel (30) einer abgewinkelten Sonnenblendenachse (20) lagert und im Bereichs eines anderen Stirnendes einen Gegenlagerstift (21) trägt, wobei die Sonnenblendenachse (20) mit ihrem zweiten Schenkel in einem Hauptlagerböckchen (3) gelagert ist und der Gegenlagerstift (21) lösbar in einem in einem Gegenlagerböckchen (4) ausgebildeten Klipsmaul (17) aufgenommen ist und wobei der erste Sonnenblendenkörper (1) aus einer am Dachhimmel (49) eines Fahrzeugs anliegenden Nichtgebrauchslage nach unten klappbar und zu einer Gebrauchslage vor einer Fahrzeugseitenscheibe schwenkbar ist, und mit einem zweiten, eine flache etwa rechteckige Form aufweisenden Sonnenblendenkörper (2), der im Bereich seiner Längsenden jeweils eine, einen Längsrand desselben überragende Lagerachse (23) mit gegeneinander gerichteten und parallel zum Längsrand ausgerichteten Endabschnitten (24), von denen der eine im Hauptlagerböckchen (3) und der andere im Gegenlagerböckchen (4) gelagert ist, um den zweiten Sonnenblendenkörper (2) aus einer etwa waagerecht ausgerichteten Nichtgebrauchslage in eine etwa vertikal ausgerichtete Gebrauchslage klappen zu können, **dadurch gekennzeichnet, daß** der erste Schenkel (30) der Sonnenblendenachse (20) und der Gegenlagerstift (21) des ersten Sonnenblendenkörpers (1) sowie die Endabschnitte (24) der Lagerachsen (23) des zweiten Sonnenblendenkörpers (2) eine gemeinsame Achsenmittellinie (22) haben.

2. Sonnenblende nach Anspruch 1, **dadurch gekennzeichnet, daß** der erste Sonnenblendenkörper (1) wie auch der zweite Sonnenblendenkörper (2) jeweils aus einem Polstereigenschaften aufweisenden Kunststoffmaterial besteht und jeweils mit einem Umhüllungsmaterial aus Leder, Kunststofffolie oder Textilmaterial verkleidet ist.

3. Sonnenblende nach Anspruch 1 oder 2, **dadurch gekennzeichnet, daß** der erste Sonnenblendenkörper (1) eine im Kunststoffmaterial eingebettete Stabilisierungseinlage (27) und einen damit verbundenen mit einer Momentenfeder (29) ausgerüsteten Lagerkörper (28) für die Lageraufnahme und zum Klemmen des ersten Schenkels (30) der Sonnenblendenachse (20) aufweist.

4. Sonnenblende nach wenigstens einem der vorangegangenen Ansprüche, **dadurch gekennzeichnet, daß** der zweite Sonnenblendenkörper (2) eine im Kunststoffmaterial eingebettete Stabilisierungseinlage (31) aufweist, die zumindest teilweise aus Rundstahl gebildet ist und die aus einer Längsrandkante des zweiten Sonnenblendenkörpers (2) heraustritt um hier durch jeweils zweifache Abwinklungen Lagerachsen (23) mit Endabschnitten (24) zum Eingreifen in das Hauptlagerböckchen (3) einerseits und Gegenlagerböckchen (4) andererseits zu bilden.

5. Sonnenblende nach wenigstens einem der vorangegangenen Ansprüche, **dadurch gekennzeichnet, daß** das Hauptlagerböckchen (3) ein Kunststoff-Spritzgußteil ist, welches eine Grundplatte (5) mit einem Befestigungsloch (9) und einem Montagehaken (11), einen Achsdom (10) mit einer Lageröffnung für den zweiten Schenkel der Sonnenblendenachse (20), ein Achsenaufnahmeloch (8) für den Endabschnitt (24) einer der Lagerachsen (23) des zweiten Sonnenblendenkörpers (2) sowie eine Aufnahmeöffnung für eine darin eingesetzte, den vorgenannten Endabschnitt (24) tangierende Momentenfeder (26) aufweist.

6. Sonnenblende nach wenigstens einem der vorangegangenen Ansprüche, **dadurch gekennzeichnet, daß** das Gegenlagerböckchen (4) ein Kunststoff-Spritzgußteil ist, welches einen Korpus (13) mit einem Durchgangsloch (18) für eine Befestigungsschraube, einen Montagehaken (19), ein Klipsmaul (17) für den Gegenlagerstift (21), ein Achsenaufnahmeloch (15) für den Endabschnitt (24) einer der Lagerachsen (23) des zweiten Sonnenblendenkörpers (2) sowie eine Aufnahmeöffnung für eine darin eingesetzte, den vorgenannten Endabschnitt (24) tangierende Momentenfeder (26) aufweist.

7. Sonnenblende nach wenigstens einem der vorangegangenen Ansprüche, **dadurch gekennzeichnet, daß** der erste und/oder der zweite Sonnenblendenkörper (1, 2) mit einem Spiegel (35, 37, 42, 44) ausgerüstet ist.

8. Sonnenblende nach wenigstens einem der vorangegangenen Ansprüche, **dadurch gekennzeichnet, daß** der erste und/oder der zweite Sonnenblendenkörper (1, 2) mit einer Beleuchtungseinheit (36) ausgerüstet ist.

9. Sonnenblende nach wenigstens einem der vorangegangenen Ansprüche, **dadurch gekennzeichnet, daß** der erste und/oder der zweite Sonnenblendenkörper (1, 2) sowohl mit einem Spiegel (35, 37, 42, 44) als auch mit einer Beleuchtungseinrichtung (36) ausgerüstet ist.

10. Sonnenblende nach wenigstens einem der vorangegangenen Ansprüche, **dadurch gekennzeichnet, daß** der zweite Sonnenblendenkörper (2) eine Durchgangsöffnung mit einer darin eingesetzten Spiegelbaueinheit (43) aufweist, die einen Spiegel (44), ein Deckelgehäuse (45) und eine Abdeckklappe (47) umfaßt, wobei das Deckelgehäuse (45) der einen Breitseite und die Abdeckklappe (47) der anderen Breitseite des zweiten Sonnenblendenkörpers (2) zugeordnet ist und wobei die Anordnung so getroffen ist, daß der Spiegel (44) sowohl in der hochgeklappten Nichtgebrauchslage des zweiten Sonnenblendenkörpers (2) durch Herunterklappen des Deckelgehäuses (45) nebst Spiegel (44) als auch in der Gebrauchslage des zweiten Sonnenblendenkörpers (2) durch Aufklappen der Abdeckklappe (47) einsehbar ist.

## Claims

1. Sun visor for vehicles with a first sun visor body (1) which has a flat, approximately rectangular shape, in the region of one end supports a first limb (30) of an angled sun visor spindle (20) and in the region of another end bears a counterbearing pin (21), the sun visor spindle (20) being mounted by its second limb in a small main bearing bracket (3) and the counterbearing pin (21) being held releasably in a clip mouth (17) formed in a small counterbearing bracket (4), and the first sun visor body (1) being foldable downwards out of a not-in-use position bearing against the roof lining (49) of a vehicle and being pivotable into a use position in front of a vehicle side window, and with a second sun visor body (2) which has a flat, approximately rectangular shape which, in the region of its longitudinal ends, has a respective bearing spindle (23) which protrudes over a longitudinal border of the said sun visor body and has end sections (24) which are directed towards each other and are aligned parallel to the longitudinal border and of which the one is mounted in the small main bearing bracket (3) and the other in the small counterbearing bracket (4) in order to be able to fold the second sun visor body (2) from an approximately horizontally oriented not-in-use position into an approximately vertically oriented use position, **characterized in that** the first limb (30) of the sun visor spindle (20) and the counterbearing pin (21) of the first sun visor body (1) and the end sections (24) of the bearing spindles (23) of the second sun visor body (2) have a common axial centre line (22).

2. Sun visor according to Claim 1, **characterized in that** the first sun visor body (1) and the second sun visor body (2) are in each case composed of a plastic material having cushioning properties and are in each case clad with a covering material of leather, plastic sheeting or textile material.

3. Sun visor according to Claim 1 or 2, **characterized in that** the first sun visor body (1) has a stabilizing insert (27) embedded in the plastic material and a bearing body (28), which is connected thereto, is equipped with a torque spring (29) and is intended for the bearing mounting and for the clamping of the first limb (30) of the sun visor spindle (20).

4. Sun visor according to at least one of the preceding claims, **characterized in that** the second sun visor body (2) has a stabilizing insert (31) which is embedded in the plastic material, is at least partially formed from round steel and emerges from a longitudinal border edge of the second sun visor body (2) in order here, by means of double angled portions in each case, to form bearing spindles (23) with end sections (24) for engagement in the small main bearing bracket (3), on the one hand, and small counterbearing bracket (4) on the other hand.

5. Sun visor according to at least one of the preceding claims, **characterized in that** the small main bearing bracket (3) is a plastic injection-moulded part which has a base plate (5) with a fastening hole (9) and an installation hook (11), a spindle dome (10) with a bearing opening for the second limb of the sun visor spindle (20), a spindle-receiving hole (8) for the end section (24) of one of the bearing spindles (23) of the second sun visor body (2) and a receiving opening for a torque spring (26) which is inserted therein and is tangent to the abovementioned end section (24).

6. Sun visor according to at least one of the preceding claims, **characterized in that** the small counterbearing bracket (4) is a plastic injection-moulded part which has a body (13) with a passage hole (18) for a fastening screw, an installation hook (19), a clip mouth (17) for the counterbearing pin (21), a spindle-receiving hole (15) for the end section (24) of one of the bearing spindles (23) of the second sun visor body (2) and a receiving opening for a torque spring (26) which is inserted therein and is tangent to the abovementioned end section (24).

7. Sun visor according to at least one of the preceding claims, **characterized in that** the first and/or the second sun visor body (1, 2) is equipped with a mirror (35, 37, 42, 44).

8. Sun visor according to at least one of the preceding claims, **characterized in that** the first and/or the second sun visor body (1, 2) is equipped with an illuminating unit (36).

9. Sun visor according to at least one of the preceding claims, **characterized in that** the first and/or the second sun visor body (1, 2) is equipped both with a mirror (35, 37, 42, 44) and with an illuminating device (36).

10. Sun visor according to at least one of the preceding claims, **characterized in that** the second sun visor body (2) has a passage opening with a mirror unit (43) which is inserted therein and comprises a mirror (44), a cover housing (45) and a covering flap (47), the cover housing (45) being assigned to the one wide side and the covering flap (47) being assigned to the other wide side of the second sun visor body (2) and the arrangement being made in such a manner that the mirror (44) can be seen both in the upwardly folded not-in-use position of the second sun visor body (2), by folding down the cover housing (45) next to the mirror (44), and also in the use position of the second sun visor body (2), by opening up the covering flap (47).

## Revendications

1. Pare-soleil pour véhicules comprenant un premier corps de pare-soleil (1) présentant une forme plate approximativement rectangulaire, qui supporte dans la région d'une extrémité frontale une première branche (30) d'un axe de pare-soleil coudé (20) et qui porte dans la région d'une autre extrémité frontale une goupille de palier conjuguée (21), l'axe de pare-soleil (20) étant supporté avec sa deuxième branche dans un bloc-palier principal (3) et la goupille de palier conjuguée (21) étant reçue de manière desserrable dans un mors d'enclipsage (17) réalisé dans un bloc-palier conjugué (4) et le premier corps de pare-soleil (1) pouvant être rabattu vers le bas depuis une position de non utilisation s'appliquant contre l'habillage du plafond (49) d'un véhicule et pouvant être pivoté dans une position d'utilisation devant une vitre latérale du véhicule, et comprenant un deuxième corps de pare-soleil (2) présentant une forme plate approximativement rectangulaire qui présente à chaque fois, dans la région de ses extrémités longitudinales, un axe de palier (23) dépassant d'un bord longitudinal de celui-ci, avec des portions d'extrémité (24) orientées l'une vers l'autre et s'étendant parallèlement au bord longitudinal, dont l'une est supportée dans le bloc-palier principal (3) et l'autre dans le bloc-palier conjugué (4), afin de pouvoir rabattre le deuxième corps de pare-soleil (2) d'une position de non utilisation approximativement horizontale dans une position d'utilisation approximativement verticale, **caractérisé en ce que** la première branche (30) de l'axe du pare-soleil (20) et la goupille de palier conjuguée (21) du premier corps de pare-soleil (1) ainsi que les portions d'extrémité (24) des axes de palier (23) du deuxième corps de pare-soleil (2) ont un axe médian commun (22).

2. Pare-soleil selon la revendication 1, **caractérisé en ce que** le premier corps de pare-soleil (1) comme le deuxième corps de pare-soleil (2) se composent chacun d'un matériau en plastique présentant des propriétés de rembourrage et sont chacun revêtus d'un matériau d'enveloppe en cuir, en feuil plastique ou en matériau textile.

3. Pare-soleil selon la revendication 1 ou 2, **caractérisé en ce que** le premier corps de pare-soleil (1) présente un insert de stabilisation (27) noyé dans le matériau en plastique et un corps de palier (28) équipé d'un ressort à couple (29) pour la réception et le serrage de la première branche (30) de l'axe du pare-soleil (30).

4. Pare-soleil selon au moins l'une quelconque des revendications précédentes, **caractérisé en ce que** le deuxième corps de pare-soleil (2) présente un insert de stabilisation (31) noyé dans le matériau en plastique, qui est formé au moins en partie en acier rond et qui ressort d'une arête de bord longitudinal du deuxième corps de pare-soleil (2) pour former ici par des doubles coudages des axes de palier (23) avec des portions d'extrémité (24) pour venir en prise dans le bloc-palier principal (3) d'une part et le bloc-palier conjugué (4) d'autre part.

5. Pare-soleil selon au moins l'une quelconque des revendications précédentes, **caractérisé en ce que** le bloc-palier principal (3) est une pièce moulée par injection de plastique qui présente une plaque de base (5) avec un trou de fixation (9) et un crochet de montage (11), un dôme d'axe (10) avec une ouverture de palier pour la deuxième branche de l'axe du pare-soleil (20), un trou de réception d'axe (8) pour la portion d'extrémité (24) de l'un des axes de palier (23) du deuxième corps de pare-soleil (2) ainsi qu'une ouverture de réception pour un ressort à couple (26) insérée dans celle-ci, tangent la ladite portion d'extrémité (24).

6. Pare-soleil selon au moins l'une quelconque des revendications précédentes, **caractérisé en ce que** le bloc-palier conjugué (4) est une pièce moulée par injection de plastique qui présente un corps (13), avec un trou de passage (18) pour une vis de fixation, un crochet de montage (19), un mors d'enclipsage (17) pour la goupille de palier conjuguée (21), un trou de réception d'axe (15) pour la portion d'extrémité (24) de l'un des axes de palier (23) du deuxième corps de pare-soleil (2) ainsi qu'une ouverture de réception pour un ressort à couple (26) inséré dans celle-ci, tangent à ladite portion d'extrémité (24).

7. Pare-soleil selon au moins l'une quelconque des revendications précédentes, **caractérisé en ce que** le premier et/ou le deuxième corps de pare-soleil (1, 2) est muni d'un miroir (35, 37, 42, 44).

8. Pare-soleil selon au moins l'une quelconque des revendications précédentes, **caractérisé en ce que** le premier et/ou le deuxième corps de pare-soleil (1, 2) est muni d'une unité d'éclairage (36).

9. Pare-soleil selon au moins l'une quelconque des revendications précédentes, **caractérisé en ce que** le premier et/ou le deuxième corps de pare-soleil (1, 2) est muni à la fois d'un miroir (35, 37, 42, 44) et d'une unité d'éclairage (36).

10. Pare-soleil selon au moins l'une quelconque des revendications précédentes, **caractérisé en ce que** le deuxième corps de pare-soleil (2) présente une ouverture de passage avec une unité de miroir (43) insérée dedans, qui comprend un miroir (44), un boîtier de couvercle (45) et un volet de recouvrement (47), le boîtier de couvercle (45) étant associé à un côté large et le volet de recouvrement (47) étant associé à l'autre côté large du deuxième corps de pare-soleil (2) et l'agencement étant tel que le miroir (44) peut être visible à la fois dans la position de non utilisation rabattue vers le haut du deuxième corps de pare-soleil (2) par rabattement vers le bas du boîtier de couvercle (45) avec le miroir (44) et aussi dans la position d'utilisation du deuxième corps de pare-soleil (2) par rabattement du volet de recouvrement (47).
